(19) Europäisches Patentamt
European Patent Office
Office européen des brevets

(11) **EP 1 777 436 A1**

(12) **DEMANDE DE BREVET EUROPEEN**

(43) Date de publication:
**25.04.2007 Bulletin 2007/17**

(51) Int Cl.:
*F16F 15/04* (2006.01)      *F02M 61/16* (2006.01)
*F02M 63/00* (2006.01)

(21) Numéro de dépôt: **06301036.7**

(22) Date de dépôt: **11.10.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **19.10.2005  FR 0553164**

(71) Demandeur: **Peugeot Citroen Automobiles SA
78140 Vélizy-Villacoublay (FR)**

(72) Inventeurs:
• **Sauvage, Olivier
92210 Saint-Cloud (FR)**
• **Peronnet, Cyril
92250 La Garenne Colombes (FR)**

(74) Mandataire: **Ménès, Catherine et al
Peugeot Citroen Automobiles SA
PI (LG081), 18 rue des Fauvelles
92250 La Garenne-Colombes (FR)**

(54) **Dispositif d'amortissement des vibrations pour un injecteur carburant**

(57)      La présente invention a pour objet un dispositif d'injection de carburant dans un cylindre de véhicule automobile, ce dispositif comprenant un porte-injecteur (10) admettant une partie cylindrique (11) et traversé par une lumière axiale (12), un injecteur (30) rigidement fixé dans la lumière (12) et comportant un orifice (31) pour injecter le carburant dans le cylindre, un élément mobile (32) sélectivement mobile entre une position obturant l'orifice (31) et une position dégageant l'orifice (31), des moyens (33) d'actionnement de l'élément mobile (32), des moyens (40) formant au moins un système masse (41) - ressort (42) apte à entrer en résonance, à au moins une fréquence centrale donnée $f_0$, la dite fréquence centrale correspondant à des vibrations axiales résultant des mouvements de l'élément mobile (32) et/ou des moyens d'actionnement (33), caractérisé en ce que la masse (41) est mobile axialement et la partie formant ressort (42) liant la masse (41) au porte-injecteur (10) est apte à se cisailler sous l'action des déplacements axiaux de la masse (41).

FIG.2

EP 1 777 436 A1

**Description**

L'invention concerne un dispositif d'injection de carburant dans un cylindre de moteur thermique de véhicule automobile. Plus précisément, l'invention concerne un dispositif d'injection de carburant dans un cylindre de véhicule automobile, du type comprenant un porte-injecteur de forme générale allongée suivant une direction axiale et traversé par une lumière axiale, et un organe d'injection rigidement fixé dans la lumière, cet organe comprenant un orifice de passage du carburant injecté dans le cylindre, un élément sélectivement mobile entre une position d'obturation de l'orifice et une position de dégagement de l'orifice, et des moyens d'actionnement pour déplacer l'élément mobile entre ses positions d'obturation et de dégagement. Des dispositifs de ce type sont connus de l'art antérieur, et émettent des bruits dus au déplacement de l'élément mobile et/ou à l'action des moyens d'actionnement. Ces bruits sont de plus en plus marqués dans les nouveaux véhicules automobiles. En effet, les constructeurs automobiles cherchent à maîtriser les quantités de carburant injectées, dans le but de réduire les émissions de gaz nocifs ou de réduire la consommation de carburant. Ceci se traduit par des mouvements de l'organe mobile de plus en plus rapides et fréquents, et en conséquence par des sollicitations mécaniques plus fréquentes des moyens d'actionnements. Dans ce contexte, des solutions ont déjà été proposées pour réduire l'amplitude des vibrations axiales du porte-injecteur résultant des mouvements de l'élément mobile et/ou de l'action des moyens d'actionnement à au moins une première fréquence centrale prédéterminée. En effet, la demande de brevet au nom de la demanderesse FR0410339 propose de réduire l'amplitude des vibrations axiales du porte-injecteur en utilisant un système masse - ressort comprenant une masse mobile axialement entourant le porte-injecteur et des moyens élastiques liant ladite masse au porte-injecteur aptes à se détendre et se comprimer axialement. Dans une variante préférée, les moyens élastiques sont constitués d'un ressort hélicoïdal enroulé autour du porte-injecteur, ou d'un ressort cylindrique enfilé autour du porte-injecteur, ou d'une ou plusieurs rondelles élastiques. Cette solution permet une bonne réduction des vibrations mais, l'utilisation de moyens élastiques du type « ressort » n'est pas toujours compatible avec les contraintes d'encombrement minimal inhérentes aux dispositifs d'injection. C'est pourquoi, la présente invention a pour but de pallier tout ou partie des inconvénients décrits ci-avant.

A cette fin, l'invention a pour objet un dispositif d'injection de carburant dans un cylindre de véhicule automobile, ce dispositif comprenant un porte-injecteur admettant une partie cylindrique et traversé par une lumière axiale, un injecteur rigidement fixé dans la lumière et comportant un orifice pour injecter le carburant dans le cylindre, un élément mobile sélectivement mobile entre une position obturant l'orifice et une position dégageant l'orifice, des moyens d'actionnement de l'élément mobile, des moyens formant au moins un système masse - ressort apte à entrer en résonance, à au moins une fréquence centrale donnée $f_0$, la dite fréquence coïncidant avec la fréquence centrale des vibrations axiales résultant des mouvements de l'élément mobile et/ou des moyens d'actionnement, caractérisé en ce que la masse est mobile axialement et la partie formant ressort liant la masse au porte-injecteur est apte à se cisailler sous l'action des déplacements axiaux de la masse.

Selon certaines caractéristiques, la partie formant ressort est constituée d'au moins une bague montée sur la partie cylindrique du porte-injecteur.

Selon d'autres caractéristiques, la masse est une bague montée sur la partie formant ressort.

Selon d'autres caractéristiques, les moyens forment deux systèmes masse-ressort disposés en série et destinés à réduire, voire annuler, à deux fréquence centrales données les vibrations axiales résultant des mouvements de l'élément mobile et/ou des moyens d'actionnement.

Selon d'autres caractéristiques, la partie formant ressort est constituée d'un matériau viscoélastique.

Selon d'autres caractéristiques, la masse est constituée d'un matériau métallique.

Selon d'autres caractéristiques, la masse et la partie formant ressort forment une seule et même pièce.

Selon d'autres caractéristiques, la partie formant ressort admet un coefficient d'amortissement visqueux $C_b$ tel que $C_b = \sqrt{\dfrac{3KbMb}{2(1 + M/Mb)}}$ , M étant la masse apparente du porte-injecteur vu par le système 40, et Kb et Mb, respectivement la raideur et la masse du système masse-ressort.

D'autres caractéristiques et avantages de l'invention ressortiront clairement de la description qui va suivre, à titre indicatif et nullement limitatif, en référence aux figures en annexe dans lesquelles :

- la figure 1 est une coupe suivant l'axe (2) d'un dispositif d'injection conforme à l'invention.
- La figure 2 est une vue de côté du dispositif d'injection doté d'un système masse-ressort conforme à l'invention suivant un premier mode de réalisation.
- La figure 3 est une vue de côté du dispositif d'injection doté d'un système masse-ressort conforme à l'invention suivant un second mode de réalisation.
- La figure 4 est une vue de côté du dispositif d'injection doté d'un système masse-ressort conforme à l'invention suivant un troisième mode de réalisation.

- La figure 5 est une vue de côté du dispositif d'injection doté d'un système masse-ressort conforme à l'invention suivant un quatrième mode de réalisation.

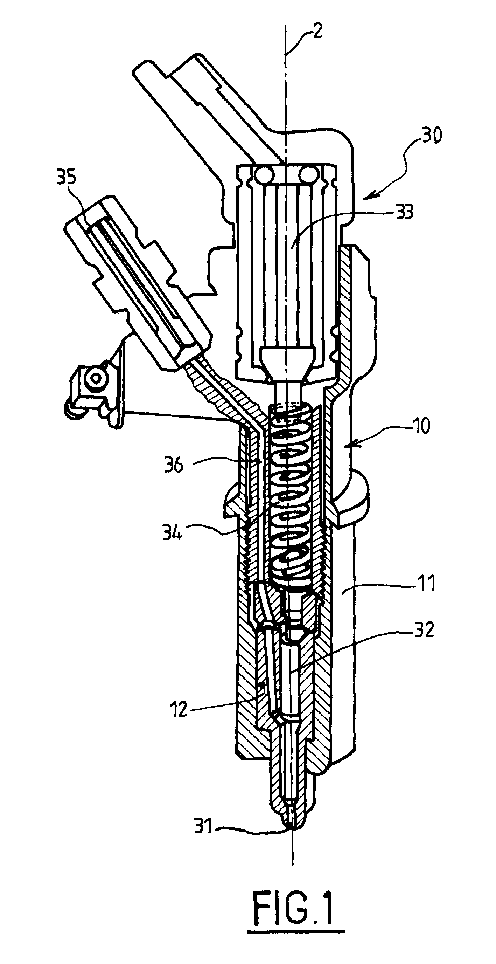

Le dispositif d'injection représenté sur la figure 1 a pour fonction d'injecter périodiquement une quantité de carburant prédéterminée dans un cylindre d'un moteur thermique de véhicule automobile. Ce dispositif comprend un porte-injecteur 10 de forme générale allongée suivant une direction axiale 2 et traversé par une lumière axiale 12, et un organe d'injection 30 rigidement fixé dans la lumière 12. Le porte injecteur 10 présente typiquement une portion cylindrique 11 d'axe 2, et une collerette ménagée autour d'une partie intermédiaire de la portion cylindrique 11 et faisant saillie radialement vers l'extérieur. La lumière 12 est le volume délimité par l'intérieur de la portion cylindrique 11. Le porte-injecteur 10 est rigidement fixé dans la culasse du moteur non représenté sur la figure 1. L'organe d'injection 30 est fixé rigidement au porte-injecteur 10. L'injecteur 30 présente une forme allongée axialement, et comprend une entrée de carburant sous pression 35 ménagée à une extrémité supérieure, un orifice de passage du carburant 31 ménagé à une extrémité inférieure du corps, et un canal interne 36 permettant au carburant de circuler de l'entrée 35 à l'orifice de passage 31. L'injecteur 30 comprend encore un élément 32 sélectivement mobile entre une position d'obturation de l'orifice 31 et une position de dégagement de l'orifice 31, et des moyens d'actionnement 33 pour déplacer l'élément mobile 32 entre ses positions d'obturation et de dégagement. L'injecteur 30 comprend encore un ressort de rappel 34 sollicitant l'élément mobile 32 axialement vers l'extrémité inférieure de l'injecteur 30, afin de garantir la position d'obturation de l'orifice 31. Les moyens d'actionnement 33 déplacent l'élément mobile 32 à l'encontre de la force de rappel du ressort 34 de sa position d'obturation à sa position de dégagement, le carburant arrivant sous pression à l'entrée 31 étant alors projeté vers le cylindre à travers l'orifice 31.

La réponse dynamique du porte-injecteur 10 à l'excitation notamment de l'élément mobile 32 et/ou des moyens d'actionnement 33 rend celui-ci émissif d'ondes sonores. Par ailleurs, du fait que le porte-injecteur 10 est fixé rigidement à la culasse, la réponse dynamique du porte-injecteur 10 peut constituer un phénomène excitateur pour cette culasse, celle-ci devenant à son tour émissive. Il a été mis en évidence que le bruit émis par le porte-injecteur 10 est dû principalement à une déformation axiale de celui-ci de type traction compression, le porte injecteur subissant alternativement une contrainte de compression axiale et une contrainte d'extension axiale. La fréquence centrale des vibrations axiales engendrées par ces contraintes alternatives est par exemple de l'ordre de grandeur de 4000 Hertz..

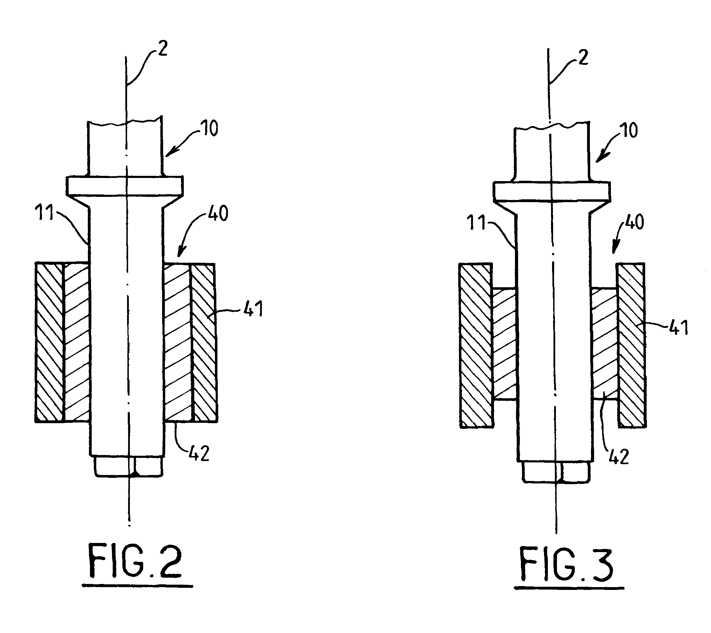

Selon l'invention et tel que décrit en figure 2, le dispositif d'injection comprend au moins un système masse-ressort 40 pour réduire, voire annuler, l'amplitude des vibrations axiales du porte-injecteur 10 résultant des mouvements de l'élément mobile 32 et/ou de l'action des moyens d'actionnement 33, à au moins une première fréquence centrale prédéterminée $f_0$. Cette première fréquence centrale $f_0$ est choisie égale à la fréquence centrale des vibrations néfastes du porte-injecteur 10 située par exemple autour de 4000 Hertz. Le dimensionnement global du système masse-ressort 40 dépend avant tout du contenu spectral des vibrations qu'il doit atténuer. Suivant une modélisation très classique, le système masse-ressort 40 se compose d'une partie 41 formant masse et matérialisant l'inertie du système 40 par une masse $M_b$, et une partie 42 formant ressort matérialisant la souplesse en cisaillement du système 40 par une raideur $K_b$.

Lorsque l'injecteur génère des vibrations néfastes dans le voisinage de la fréquence centrale $f_0$, un premier principe de dimensionnement, fondé sur les équations de mouvement du système 40, est de choisir $M_b$ et $K_b$ tels que :

$$\frac{1}{2\pi}\sqrt{\frac{K_b}{M_b}} = f_0$$

c'est-à-dire tel que la fréquence centrale propre du système 40 isolé et non amorti corresponde à la fréquence centrale à traiter.

Un second principe de dimensionnement consiste ensuite à jouer sur la masse $M_b$ tout en gardant le rapport

$\dfrac{K_b}{M_b}$ constant afin de régler la bande passante du système 40, c'est-à-dire afin de régler la gamme de fréquences centrales autour de $f_0$ pour lesquelles le système 40 sera efficace.

De plus, en prenant en compte un amortissement de type visqueux pour modéliser les effets de dissipation se produisant dans la partie formant ressort 42, on choisit le coefficient d'amortissement visqueux $C_b$ de manière à ce que le facteur $\zeta$ atteigne la valeur $\zeta_{opt}$ donnée par :

$$\zeta_{opt} = \sqrt{\frac{3\mu}{8(1+\mu)}} \quad avec \quad \zeta = \frac{C_b}{2\sqrt{K_b M_b}}, \quad \mu = \frac{M_b}{M}$$

et M étant la masse apparente du porte-injecteur 10 vu par le système 40. En d'autres termes, on optimise le coefficient d'amortissement visqueux $C_b$, en utilisant la formule suivante :

$$C_b = \sqrt{\frac{3KbMb}{2(1+M/Mb)}}$$

M étant la masse apparente du porte-injecteur 10 vu par le système 40,

Kb et Mb, respectivement la raideur et la masse du système 40.

Si l'on désire un dimensionnement plus précis encore de l'ensemble constitué par le porte-injecteur 10 et le système 40, on peut ensuite l'analyser par des méthodes aux éléments finis qui permettront de rendre compte de la géométrie exacte du système et des propriétés précises des matériaux employés.

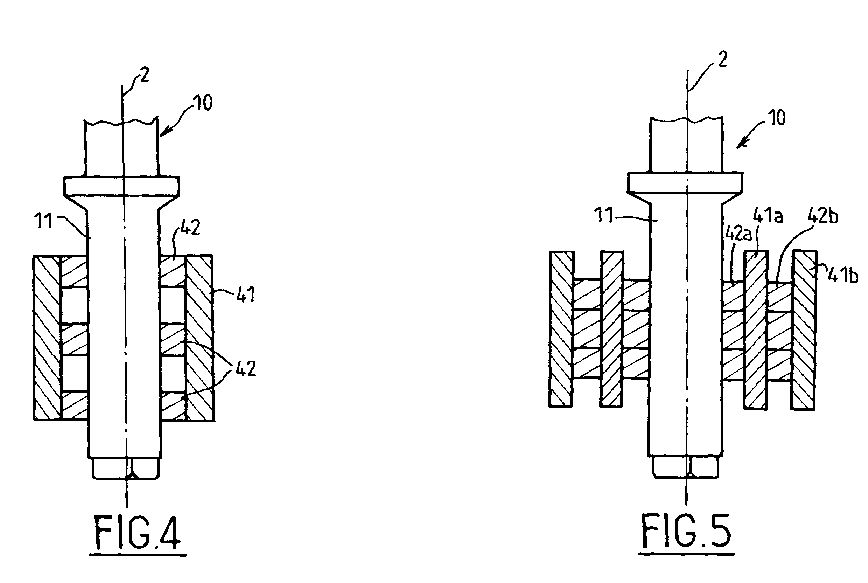

Les figures 3 et 4 représentent chacune un mode de réalisation particulier. Dans le mode de réalisation représenté dans la figure 3, la partie formant ressort 42 est moins haute que la masse 41. Cette caractéristique géométrique permet de diminuer la rigidité du système 40. Il en va de même dans le mode de réalisation représenté dans la figure 4, où le fait de scinder la partie formant ressort 42 en trois parties de hauteur très réduite diminue aussi la rigidité du système 40.

Si l'on désire réduire, voire annuler, l'amplitude de l'excitation axiale du porte-injecteur 10 à encore une autre fréquence centrale $f1$, il suffit d'associer, en série, au système 40 un second système. La figure 5 décrit deux systèmes masse-ressort en série composés respectivement d'un premier système de masse 41 a et de ressort 42a et d'un second système de masse 41 b et de ressort 42b.

Avantageusement, la partie formant ressort 42, 42a, 42b est constituée d'une bague en matériau viscoélastique montée sur la partie cylindrique 11 du porte-injecteur 10. Suivant un mode préféré, le matériau viscoélastique est un élastomère, les élastomères étant connus pour leurs coefficients d'amortissement visqueux $C_b$ très intéressants.

Avantageusement, la masse 41, respectivement 41 a, 41 b est une bague en matériau métallique montée sur la partie formant ressort 42, respectivement 42a, 42b.

Suivant un autre mode de réalisation, le système masse-ressort 40 est constitué d'une seule et même pièce réalisée dans un matériau continu qui joue le rôle de la masse 41 et de la partie formant ressort 42. Avantageusement, ce matériau est un composite à matrice élastomère chargée en renforts. Afin d'optimiser le système 40, le composite à matrice élastomère peut être chargé en renfort suivant un gradient radial. En d'autres termes, le composite est très peu chargé en renforts dans la zone du système 40 proche du porte-injecteur 10 et devient en revanche très chargé en renforts dans la zone du système 40 éloignée du porte-injecteur 10.

**Revendications**

1. Dispositif d'injection de carburant comprenant un porte-injecteur (10) admettant une partie cylindrique (11) et traversé par une lumière axiale (12), un injecteur (30) rigidement fixé dans la lumière (12) et comportant un orifice (31) d'injection, un élément mobile (32) sélectivement mobile entre une position obturant l'orifice (31) et une position dégageant l'orifice (31), des moyens (33) d'actionnement de l'élément mobile (32), des moyens (40) formant au moins un système masse (41) - ressort (42) apte à entrer en résonance, à au moins une fréquence centrale donnée $f_0$, la dite fréquence centrale correspondant à des vibrations axiales résultant des mouvements de l'élément mobile (32) et/ou des moyens d'actionnement (33), **caractérisé en ce que** la masse (41) est mobile axialement et la partie formant ressort (42) liant la masse (41) au porte-injecteur (10) est apte à se cisailler sous l'action des déplacements axiaux de la masse (41).

2. Dispositif d'injection selon la revendication 1, **caractérisé en ce que** la partie formant ressort (42) est constituée d'au moins une bague montée sur la partie cylindrique (11) du porte-injecteur (10).

3. Dispositif d'injection selon l'une quelconques des revendications précédentes, **caractérisé en ce que** la masse (41) est une bague montée sur la partie formant ressort (42).

4. Dispositif d'injection selon la revendication 1, **caractérisé en ce que** les moyens (40) forment deux systèmes masses (41 a, 41 b) - ressort (42a, 42b) disposés en série et destinés à réduire à deux fréquences centrales données $f_0$ et $f_1$ les vibrations axiales résultant des mouvements de l'élément mobile (32) et/ou des moyens d'actionnement (33).

5. Dispositif d'injection selon l'une quelconques des revendications précédentes, **caractérisé en ce que** la partie formant ressort (42, 42a, 42b) est constituée d'un matériau viscoélastique.

6. Dispositif d'injection selon l'une quelconques des revendications précédentes, **caractérisé en ce que** la masse (41, 41 a, 41 b) est constituée d'un matériau métallique.

7. Dispositif d'injection selon l'une quelconques des revendications 1 à 5, **caractérisé en ce que** la masse (41, 41 a, 41 b) et la partie formant ressort (42, 42a, 42b) forment une seule et même pièce.

8. Dispositif d'injection selon l'une quelconques des revendications précédentes, **caractérisé en ce que** la partie formant ressort (42, 42a, 42b) admet un coefficient d'amortissement visqueux $C_b$ égal ou proche de la valeur

$$C_b = \sqrt{\frac{3KbMb}{2(1 + M / Mb)}}$$

M étant la masse apparente du porte-injecteur 10 vu par le système 40, et Kb et Mb, respectivement la raideur et la masse du système 40.

# FIG.1

FIG. 3

FIG. 2

FIG.5

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 766 405 A (DALY ET AL)<br>23 août 1988 (1988-08-23)<br>* colonne 2, ligne 47-68; figures 1,3 *<br>----- | 1-3,5-8 | INV.<br>F16F15/04<br>F02M61/16 |
| A | DE 199 47 079 A1 (SIEMENS AG)<br>10 mai 2001 (2001-05-10)<br>* colonne 3, ligne 7-47 *<br>----- | 1-8 | ADD.<br>F02M63/00 |
| A | DE 100 57 495 A1 (SIEMENS AG)<br>29 mai 2002 (2002-05-29)<br>* colonne 4, alinéas 29,30; figure 1 *<br>----- | 1-8 | |
| A | US 4 878 650 A (DALY ET AL)<br>7 novembre 1989 (1989-11-07)<br>* abrégé; figure 1 *<br>----- | 1-8 | |
| A | DE 101 32 756 A1 (L'ORANGE GMBH)<br>30 janvier 2003 (2003-01-30)<br>* colonne 3, alinéas 20,21; figure 1 *<br>----- | 1-8 | |

**DOMAINES TECHNIQUES RECHERCHES (IPC)**

F16F
F02M

Le présent rapport a été établi pour toutes les revendications

| Lieu de la recherche | Date d'achèvement de la recherche | Examinateur |
|---|---|---|
| Munich | 6 décembre 2006 | Etschmann, Georg |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 30 1036

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-12-2006

| Document brevet cité au rapport de recherche | | Date de publication | Membre(s) de la famille de brevet(s) | | Date de publication |
|---|---|---|---|---|---|
| US 4766405 | A | 23-08-1988 | AU | 614080 B2 | 22-08-1991 |
| | | | AU | 1625988 A | 04-11-1988 |
| | | | BR | 8807459 A | 22-05-1990 |
| | | | CA | 1291175 C | 22-10-1991 |
| | | | CN | 1030125 A | 04-01-1989 |
| | | | EP | 0382721 A1 | 22-08-1990 |
| | | | ES | 2007199 A6 | 01-06-1989 |
| | | | JP | 7062503 B | 05-07-1995 |
| | | | JP | 2501084 T | 12-04-1990 |
| | | | WO | 8808199 A1 | 20-10-1988 |
| DE 19947079 | A1 | 10-05-2001 | AUCUN | | |
| DE 10057495 | A1 | 29-05-2002 | WO | 0240858 A1 | 23-05-2002 |
| | | | EP | 1336045 A1 | 20-08-2003 |
| US 4878650 | A | 07-11-1989 | EP | 0411041 A1 | 06-02-1991 |
| | | | JP | 2670874 B2 | 29-10-1997 |
| | | | JP | 3502227 T | 23-05-1991 |
| | | | WO | 8910478 A1 | 02-11-1989 |
| DE 10132756 | A1 | 30-01-2003 | AUCUN | | |

Pour tout renseignement concernant cette annexe : voir Journal Officiel de l'Office européen des brevets, No.12/82

**EP 1 777 436 A1**

## RÉFÉRENCES CITÉES DANS LA DESCRIPTION

**Documents brevets cités dans la description**

- FR 0410339